Europäisches Patentamt

European Patent Office

Office européen des brevets

(19)

(11) Veröffentlichungsnummer: **0 000 753**
**B1**

(12) **EUROPÄISCHE PATENTSCHRIFT**

(21) Anmeldenummer: **78100539.2**

(51) Int. Cl.³: **C 08 G 63/62**

(22) Anmeldetag: **28.07.78**

(54) Verfahren zur Herstellung von Polycarbonaten und die erhaltenen Polycarbonate

(30) Priorität: **09.08.77 DE 2735775**

(43) Veröffentlichungstag der Anmeldung:
**21.02.79 Patentblatt 79/04**

(45) Bekanntmachung des Hinweises auf die Patenterteilung:
**10.12.80 Patentblatt 80/25**

(84) Benannte Vertragsstaaten:
**DE FR GB NL**

(56) Entgegenhaltungen:
**DE - B - 1 046 311**
**DE - C - 959 497**
**US - A - 3 220 075**

**CHEMISCHES ZENTRALBLATT, Nr. 32, 4. August 1965**
**Berlin (Deutschland)**
**FUJI SHASHIN FILM KABUSHIKI KAISHA**
**"Herstellung von Polycarbonaten"**
**Seite 10098, Nr. 2837**

(73) Patentinhaber: **BAYER AG**
**Zentralbereich Patente, Marken und Lizenzen**
**D - 5090 Leverkusen 1**
**Bayerwerk (DE)**

(72) Erfinder: **Alewelt, Wolfgang, Dr.**
**Bodelschwinghstrasse 32**
**D - 4150 Krefeld (DE)**
**Margotte, Dieter, Dr.**
**Wedelstrasse 48**
**D - 4150 Krefeld (DE)**
**Wulff, Claus, Dr.**
**Kaiserstrasse 248**
**D - 4150 Krefeld (DE)**
**Vernaleken, Hugo, Dr.**
**Kreuzbergstrasse 147**
**D - 4150 Krefeld (DE)**

EP 0 000 753 B1

## Verfahren zur Herstellung von Polycarbonaten und die erhaltenen Polycarbonate

Gegenstand der vorliegenden Erfindung ist ein Verfahren zur Herstellung von aromatischen Polycarbonaten nach dem Phasengrenzflächenverfahren aus Diphenolen, das dadurch gekennzeichnet, ist, daß man als Katalysatoren N-Ethylpyrrolidin, N-Ethylpiperidin, N-Ethylmorpholin, N-Isopropylpiperidin oder N-Isopropylmorpholin in Mengen von 0,01 Mol-% bis 10 Mol-%, bezogen auf Mole an eingesetzten Diphenolen, verwendet.

Gegenstand der vorliegenden Erfindung sind außerdem die verfahrensgemäß erhältlichen Polycarbonate, die sich durch hohe Lichttransmission und geringe Vergilbungstendenz auch nach höherer Temperaturbelastung auszeichnen.

Die Farbstabilisierung von aromatischen Polycarbonaten erfolgte bisher vorzugsweise durch den Zusatz von Additiven, insbesondere von Phosphiten (vgl. DE—AS 1 128 653, DE—AS 2 140 207 und DE—OS 2 255 639) gegebenenfalls in Kombination mit anderen Additiven wie beispielsweise mit Oxetanverbindungen (DE—OS 2 510 463).

Gegenüber diesen Methoden zur Farbstabilisierung von Polycarbonaten benutzt die erfindungsgemäße Methode ein völlig anderes Prinzip, indem sie als Katalysatoren bei der Polycarbonatherstellung nach dem Zweiphasengrenzflächenpolykondensationsverfahren (vgl. DE—PS 959 497 DE—PS 1 046 311 und DE—PS 2 410 716) die eingangs genannten verwendet.

Gemäß US—PS 3 220 975 wird N-Methylpiperazin nur mit schlechtem Erfolg als Katalysator für die Herstellung von Polycarbonaten eingesetzt. (Vergleiche Spalte 1, Zeile 69 bis Spalte 2, Zeile 27).

Gemäß japanischer Auslegeschrift Nr. 11447/1972 (siehe Chem. Zentralblatt Nr. 32 vom. 4.8.1965, Seite 10098, Nr. 2837) werden Polyamine, unter anderem auch cyclische Polyamine wie N,N-Diethylpiperazin für die Polycarbonatherstellung eingesetzt. Der Einsatz der erfindungsgemäßen Katalysatoren is darin weder vorbeschrieben noch nahegelegt.

Gemäß DE—AS 21 01 700 und gemäß DE—OS 23 05 144 können N-Alkyl-morpholine als Katalysatoren für die Polycarbonatherstellung eingesetzt werden. Es war jedoch daraus nicht zu entnehmen, daß spezielle N-Alkylmorpholine gegenüber den in diesen Literaturstellen ebenfalls genannten Katalysatoren wie beispielsweise Triethylamin zu Polycarbonaten mit verbesserter thermischer Beständigkeit führen.

GB—PS 1 072 161 (siehe insbesondere Seite 2, Zeilen 28 ff) beschreibt die Herstellung von Polycarbonaten aus Di-($\beta$-trihalogen-$\alpha$-hydroxyethoxy)-alkanen, wobei unter anderem N-Methyl-morpholin als tertiäre Base verwendet werden kann. Abgesehen von dem äquimolaren Einsatz der tertiären Basen, also abgesehen von der unterschiedlichen Menge an tertiärer Base, verglichen mit der Katalysatormenge gemäß vorliegender Erfindung, hat sich gezeigt, daß N-Methylmorpholin als Katalysator gemäß vorliegender Erfindung nicht geeignet ist.

Erfindungsgemäß werden von 0,01 bis 10 Mol-%, vorzugsweise von 0,05 bis 5 Mol-% und insbesondere von 0,05 bis 2 Mol-%, bezogen auf Mole an eingesetzten Diphenolen, an den eingangs genannten katalysatoren eingesetzt.

Besonders geeignet ist: N-Ethylpiperidin.

Die erfindungsgemäße Herstellung der hochmolekularen Polycarbonate erfolgt nach dem Phasengrenzflächenverfahren. Dazu werden Diphenole, insbesondere Dihydroxydiarylalkane bzw. -cycloalkane, wobei neben den unsubstituierten Dihydroxydiarylalkanen bzw. -cycloalkanen auch solche geeignet sind, die in o-Stellung zu den phenolischen Hydroxylgruppen substituiert sind, in wäßrig-alkalischer Phase gelöst, und es wird ein für das Polycarbonat geeignetes Lösungsmittel zugefügt. Dann wird bei einer Temperatur zwischen 0 und 100°C und einem pH-Wert zwischen 9 und 14 Phosgen eingeleitet. Nach dem Phosgenieren erfolgt die Polykondensation. Die Zugabe der erfindungsgemäß geeigneten Katalysatoren kann sowohl vor dem Phosgeneinleiten wie auch nach dem Phosgeneinleiten vor der Polykondensation erfolgen. Die Phosgeneinleitungszeiten betragen zwischen 1 und 60 Minuten, die Nachkondensation zwischen 2 und 120 Minuten. Zur Isolierung der fertigen Polycarbonate wird die organische Polymerlösung abgetrennt und mit Wasser elektrolytfrei gewaschen. Anschließend kann das Polycarbonat durch Abdampfen des Lösungsmittels oder durch Ausfällen mit Nichtlösungsmitteln, wie z.B. Methanol oder Benzin isoliert werden. Die nach dem erfindungsgemäßen Verfahren hergestellten Polycarbonate können in bekannter Weise auch verzweigt sein.

Die erfindungsgemäß erhältlichen Polycarbonate haben mittlere Molekulargewichte ($M_w$ = Gewichtsmittel) zwischen 10.000 und 200.000, vorzugsweise zwischen 20.000 und 100.000, die aus der relativen Viskosität der Polycarbonate (gemessen in Methylenchlorid bei 25°C und einer Konzentration von 0,5 Gew.-%) ermittelt werden können.

Geeignete Diphenole sind z.B. Hydrochinon, Resorcin, 4,4'-Dihydroxydiphenyl, Bis-(hydroxyphenyl)-alkane, wie beispielsweise $C_1$—$C_8$-Alkylen- bzw. $C_2$—$C_8$-Alkylidenbisphenole, Bis-(hydroxyphenyl)-cycloalkane wie beispielsweise $C_5$—$C_6$-Cycloalkylen- bzw. $C_5$—$C_6$-Cycloalkyliden - bisphenole, Bis - (hydroxyphenyl) - sulfide, -ether, -ketone, -sulfoxide oder -sulfone. Ferner $\alpha,\alpha'$ - Bis - (hydroxyphenyl) - diisopropylbenzole sowie die entsprechenden kernalkylierten bzw.

kernhalogenierten Verbindungen. Bevorzugt sind Polycarbonate auf Basis Bis - (4 - hydroxyphenyl) - propan - 2,2 (Bisphenol A), Bis - (4-hydroxy - 3,5 - dichlor - phenyl) - propan - 2,2 (Tetrachlorbisphenol A), Bis - (4 - hydroxy - 3,5-dibromophenyl) - propan - 2,2 (Tetrabrombisphenol A), Bis - (4 - hydroxy - 3,5 - dimethylphenyl) - propan - 2,2 (Tetramethylbisphenol A), Bis - (4 - hydroxy - 3 - methyl - phenyl) - propan-2,2, Bis - (4 - hydroxyphenyl) - cyclohexan - 1,1 (Bisphenol Z) sowie auf Basis von Dreikernbis-phenolen wie α,α' - Bis - (4 - hydroxy - phenyl)-p - diisopropylbenzol.

Weitere für die Herstellung von Polycarbonaten geeignete Diphenole sind in den US—Patenten 3 028 265, 2 999 835, 3 148 172, 3 271 386, 2 991 273, 3 271 367, 3 280 078, 3 014 891, 2 999 846 sowie den deutschen Offenlegungsschriften 2 063 050, 2 063 052, 2 211 957 und 2 211 956 be-schrieben.

Die in den folgenden Beispielen verwendeten Ausgangsmaterialien werden wie folgt charakterisiert (Teile = Gew. Teile):

### 1. Verfahren 1:
(Phosgenierung in Methylenchlorid)
Diskontinuierliche Herstellung eines Polycarbonats

456 Teile 2,2-Bis-(4-hydroxyphenyl)-propan und 9,5 Teile p.-tert.-Butylphenol werden in 1,5 l Wasser suspendiert. In einem 3-Halskolben ausgestattet mit Rührer und Gaseinleitungsrohr, wird der Sauerstoff aus der Reaktionsmischung entfernt, indem unter Rühren 15 Min. lang Stickstoff durch die Reaktionsmischung geleitet wird. Dann werden 355 Teile 45%ige Natronlauge und 1000 Teile Methylenchlorid zugegeben. Die Mischung wird auf 25°C abge-kühlt. Unter Aufrechterhaltung dieser Tem-peratur durch Kühlen werden 237 Teile Phosgen während einer Zeitdauer von 60 Min. zugegeben. Eine zusätzliche Menge von je 75 Teilen einer 45%igen Natronlauge wird nach 15 und 30 Min. zugegeben, nachdem die Phosgenaufnahme begonnen hat. Zu der entstandenen Lösung wird der Katalysator (siehe Beispiele) zugegeben und die Mischung weitere 15 Min. gerührt. Eine hochviskose Lösung wird erhalten, deren Viskosität durch Zugabe von Methylenchlorid reguliert wird. Die wäßrige Phase wird abgetrennt. Die organische Phase wird mit Wasser salz- und alkalifrei gewaschen. Polycar-bonat wird aus der ausgewaschenen Lösung isoliert und getrocknet. Das Polycarbonat hat eine relative Viskosität von 1,30—1,31, gemessen in einer 0,5%igen Lösung von Methylenchlorid bei 20°C. Das entspricht ungefähr einem Molekulargewicht von 34.000. Das so gewonnene Polycarbonat wird extrudiert und granuliert.

### 2. Verfahren 2:
(Phosgenierung in Chlorbenzol)
Kontinuierliche Herstellung eines Polycarbonats

In einem Umpumpreaktor mit 4,25 l Reak-tionsvolumen, wie in DE—AS 2 410 716 beschrieben, werden folgende Lösungen einge-pumpt:
1. 91,2 Teile/Stunde einer Alkalisalzlösung von Bisphenol A folgender Zusam-mensetzung:

| | |
|---|---|
| 130 | Teile Bisphenol A |
| 631 | Teile Wasser |
| 103,2 | Teile 45%ige Natronlauge |
| 0,05 | Teile Natriumborhydrid |
| 2,3 | Teile p.-tert.-Butylphenol Katalysator (siehe Beispiele) |

2. 6.7 Teile/Stunde Phosgen mit
   88 Teilen/Stunde Chlorbenzol und
3. 0,5 Teile/Stunde 45%ige Natronlauge.

Die Reaktionstemperatur beträgt 72°C; die Konzentration der OH-Ionen in der wäßrigen Reaktionsphase 0,08%. Die mittlere Verweilzeit beträgt 1,4 Min.

Der aus dem Umpumpreaktor abfließenden Emulsion wird zur Erhöhung der OH-Konzentration auf 0,3 bis 0,35% weitere Natronlauge zugeführt. Die Aufkondensation des Oligocarbonats wird in einem Reaktionsrohr, wie es in DE—OS 1 920 302 bzw. US—PS 3 674 740 beschrieben, durchgeführt. Die mittlere Verweilzeit beträgt 4 Min.; die Temperatur 83°C.

Die wäßrige Reaktionsphase enthält 0,32% OH— und 0,51% $CO_3$; Bisphenol ist nicht nach-zuweisen.

Die Polycarbonatlösung, deren Feststoffge-halt 15,1% beträgt, wird elektrolytfrei gewaschen, eingedampft und über einen Ausdampfextruder isoliert. Das Polycarbonat hat eine relative Viskosität von 1,30 bis 1,31, gemessen in einer 0,5%igen Lösung von Methylenchlorid bei 20°C. Das entspricht ungefähr einem Molekulargewicht von 34.000.

Folgende Katalysatoren werden zur Herstellung von Polycarbonat eingesetzt:

Beispiel 1 (Vergleichsversuch):
1,6 Teile Triethylamin, Verfahren 1.

Beispiel 2 (Vergleichsversuch):
0,575 Teile Triethylamin, Verfahren 2.

Beispiel 3:
1,8 teile N-Ethylpiperidin, Verfahren 1.

Beispiel 4:
0,31 Teile N-Isopropylpiperidin, Verfahren 2.

Beispiel 5:
1,8 Teile N-Ethylmorpholin, Verfahren 1.

Beispiel 6:
1,0 Teile N-Ethylpyrolidin, Verfahren 1.

Beispiel 7:
0,46 Teile N-Isopropylmorpholin, Verfahren 2.

Beispiel 8 (Vergleichsversuch):
Ein Polycarbonat aus 95 Mol % Bisphenol A und 5 Mol % tetrabrombisphenol A, hergestellt nach dem Verfahren 1 mit 1,5 Teilen Triethylamin mit einer rel. Viskosität von 1,32.

Beispiel 9:
Polycarbonat aus Beispiel 8, hergestellt nach dem Verfahren 1, mit 0,6 Teilen N-Ethylpiperidin.

Die Polycarbonate wurden zu Prüfkörpern verarbeitet. Die Prüfkörper werden bei 140°C im Trockenschrank getempert. Mit Hilfe eines Spektralphotometers wurde die Lichttransmission nach DIN 5033 und DIN 4646 gemessen. Der Abfall der Lichttransmission bei 420 nm im Verlauf der Wärmebehandlung ist ein Maß für die zunehmende Verfärbung des Prüfkörpers.

TABELLE
Lichttransmission der Polycarbonatprüfstäbe bei 420 nm und einer Schichdicke von 4 mm nach Temperung bei 140°C.

| Polycarbonat aus Beispiel | Temperung | | | |
|---|---|---|---|---|
| | 0 Tage | 6 Tage | 12 Tage | 21 Tage |
| 1 (Vergleich) | 83,0 | 82,7 | 82,2 | 81,3 |
| 2 (Vergleich) | 83,5 | 83,1 | 82,2 | 81,2 |
| 3 | 86,0 | 85.9 | 85.4 | 85,0 |
| 4 | 86,5 | 86,0 | 85,7 | 85,1 |
| 5 | 85,9 | 85,7 | 85,1 | 84,8 |
| 6 | 85,8 | 85,5 | 85,0 | 84,6 |
| 7 | 86,2 | 86,1 | 85,7 | 85,0 |
| 8 (Vergleich) | 80,3 | 80,0 | 79,5 | 78,6 |
| 9 | 82,0 | 81,9 | 81,5 | 81,1 |

**Patentansprüche**

1. Verfahren zur Herstellung von aro-matischen Polycarbonaten nach dem Phasen-grenzflächenverfahren aus Diphenolen, da-durch gekennzeichnet, daß man als Katalysatoren N-Ethylpyrrolidin, N-Ethylpiperidin, N-Ethylmorpholin, N-Isopropylpiperidin oder N-Isopropylmorpholin in Mengen von 0,01 Mol-% bis 10 Mol-%, bezogen auf Mole an eingesetzten Diphenolen, verwendet.

2. Verfahren gemäß Anspruch 1, dadurch gekennzeichnet, daß man N-Ethylpiperidin verwendet.

**Claims**

1. Process for the production of aromatic polycarbonates according to the phase boundary process from diphenols, characterised in that N-ethyl-pyrrolidine, N-ethylpiperidine, N-ethylmorpholine, N-isopropyl-piperidine or N-isopropylmorpholine are used as catalysts in amounts of from 0.01 mol % to 10 mol %, relative to the mols of diphenols employed.

2. Process according to claim 1, characterised in that N-ethylpiperidine is used.

**Revendications**

1. Procédé de production de polycarbonates aromatiques par la technique à l'interface entre phases à partir de diphénols, caractérisé en ce qu'on utilise comme catalyseurs la N-éthyl-pyrrolidine, la N-éthylpipéridine, la N-éthyl-morpholine, la N-isopropylpipéridine ou la N-isopropylmorpholine en quantités de 0,01 à 10 moles % par rapport aux moles de diphénols utilisés.

2. Procédé suivant la revendication 1, caractérisé en ce qu'on utilise la N-éthylpipéridine.